# EUROPÄISCHE PATENTANMELDUNG

(11) **EP 2 014 556 A1**
(43) Veröffentlichungstag der Anmeldung: **14.01.2009**
(21) Anmeldenummer: 08159983.9
(22) Anmeldetag: 09.07.2008
(51) Int. Cl.: B65B 11/04, B65B 25/14, B65B 61/06, B65G 13/02, B65G 15/10

(54) **Verfahren und Vorrichtung zum kontinuierlichen Verpacken von Materialbahnrollen**

(30) Priorität: 10.07.2007 DE 102007032099
(71) Anmelder: Voith Patent GmbH, 89522 Heidenheim (DE)
(72) Erfinder: Stitz, Hermann Albert, 51515 Kürten (DE)

(57) **Zusammenfassung**

Die Erfindung betrifft ein Verfahren zum kontinuierlichen Verpacken von Materialbahnrollen (2.1, 2.2, 2.3, 2.n) in einer Verpackungsvorrichtung (1) und eine Verpackungsvorrichtung (1), umfassend zumindest eine, einen Umhüllungsbereich (II) bildende Umhüllungsstation (5).

Die Erfindung ist dadurch gekennzeichnet, dass die einzelnen Materialbahnrollen (2.1, 2.2, 2.3, 2.n) in gleichmäßigen Abstand (a) nacheinander der Umhüllungsstation (5) zugeführt werden, translatorisch unter gleichzeitiger Verdrehbewegung um ihre Längsachse entlang einer Verpackungsmaterialabgabevorrichtung (6) bewegt werden und fortlaufend mit einem Verpackungsmaterialstreifen (4.1) unter Ausbildung einer sich über wenigstens eine und einen Teil der dieser nachgeordneten Materialbahnrolle (2.1, 2.2, 2.3, 2.n) erstreckenden Verpackungsmaterialumhüllung (14) umhüllt werden und die Verpackungsmaterialhülle (14) zwischen zwei hintereinander die Umhüllungsstation (5) durchlaufenden Materialbahnrollen (2.1, 2.2, 2.3, 2.n) im Abstandsbereich unter Ausbildung eines Überstandes (25.1, 25.2) getrennt werden.

## Beschreibung

Die Erfindung betrifft ein Verfahren und eine Vorrichtung zum kontinuierlichen Verpacken von Materialbahnrollen in einer Verpackungseinrichtung.

Vorrichtungen und Verfahren zur Verpackung von Materialbahnrollen, insbesondere Papier- oder Kartonbahnen, sind in einer Vielzahl von Ausführungen aus dem Stand der Technik bekannt. Die Verpackung erfolgt dabei in einer entsprechenden Verpackungsvorrichtung, umfassend eine Umhüllungsstation, in der die Materialbahnrolle mittels eines Verpackungsmaterials, welches aus einer Verpackungsmaterialabgabeeinrichtung abgegeben wird, umhüllt wird. Dabei werden unterschiedliche Konzepte eingesetzt, die sich im Wesentlichen durch die Art der Relativbewegung zwischen der zu umwickelnden Materialbahnrolle und der Umhüllungsstation, insbesondere Verpackungsmaterialabgabeeinrichtung, unterscheiden.

Aus dem Prospekt Voith Paper "Twister^{™} - Das innovative Technologiekonzept für Rollenverpackung und Rollentransport" ist eine Vorrichtung zur flexiblen Rollenverpackung vorbekannt, welche in der Lage ist, Materialbahnrollen unterschiedlicher Rollenabmessungen zu wickeln. Das Prinzip dieser Vorrichtung basiert dabei auf der Spiralwicklung, wobei die Materialbahnrolle in die Umhüllungsstation verbracht wird, durch Relativbewegung der Verpackungsmaterialabgabeeinrichtung gegenüber der Längsachse der zu umwickelnden Materialbahnrolle umwickelt wird und ferner über eine Änderung des Anstellwinkels der Verpackungsmaterialabgabeeinrichtung die Wickelart beeinflusst werden kann. Insbesondere werden über eine Steuerung automatisch der Anstellwinkel der Abwickeleinheit für das Verpackungsmaterial, deren seitliche Verfahrgeschwindigkeit sowie die Rotationsgeschwindigkeit der Materialbahnrolle eingestellt. Die Gesamtrolle wird dabei in einer einzigen Wickelsequenz verpackt, wobei hier zusätzlich ein Kantenschutz durch Überstand des Verpackungsmaterials an der Stirnseite der Materialbahnrolle aufgebracht wird. Derartige Umhüllungsvorrichtungen werden in Verpackungsanlagen eingesetzt, wobei nach der gezielten getakteten Umhüllung die mit Verpackungsmaterial umwickelte Materialbahnrolle weiteren Verarbeitungsschritten unterzogen werden kann, beispielsweise dem stirnseitigen Aufbringen von Pappdeckelelementen. Die einzelnen Stationen werden dabei nacheinander taktweise durchlaufen, wobei vorzugsweise die Taktfrequenz so aufeinander abgestimmt ist, dass die Verarbeitungsvorgänge in den einzelnen Takten möglichst durch die gleiche Durchlaufzeit charakterisiert sind.

Eine Ausführung einer Wickelvorrichtung zum Umwickeln von Materialbahnrollen mit ortsfester Umhüllungsstation, insbesondere Verpackungsmaterialabgabeeinrichtung, ist aus der Druckschrift EP 1 209 082 B1 vorbekannt. Dabei wird die zu umhüllende Materialbahn ebenfalls in einer Taktfrequenz der Umhüllungsstation zugeführt. In dieser erfolgt eine translatorische Bewegung beziehungsweise Vorschubbewegung der Materialbahnrolle entlang der Verpackungsmaterialabgabevorrichtung, wobei diese zusätzlich von einer rotatorischen Bewegung der Materialbahnrolle überlagert wird. Dies kann beispielsweise durch entsprechende Führung an einer drehbaren Antriebswalze erfolgen oder aber als Antrieb über den Wickelkern. Hierbei wird eine Materialbahnrolle in einem Takt umwickelt und dann anschließend entweder weiteren Verarbeitungseinheiten der Wickelvorrichtung zugeführt oder ausgeschleust.

Die aus dem Stand der Technik bekannten Lösungen sind durch eine diskontinuierliche Arbeitsweise charakterisiert, das heißt zur Verpackung des Wickels beziehungsweise der Materialbahnrolle wird diese in die Umhüllungsstation eingebracht, umhüllt und anschließend wieder ausgeführt, bevor eine neue in die Umhüllungsstation eingebracht wird. Dazu wird der entsprechende Verpackungsmaterialstreifen immer wieder abgetrennt und neu mit der nächstfolgenden zu umhüllenden Materialbahnrolle verklebt. Zwar können mit der Taktung durch geeignete Steuerung und Abstimmung der Prozessparameter aufeinander sehr hohe Durchsätze erzielt werden, jedoch ist der steuerungstechnische Aufwand sehr hoch.

Der Erfindung liegt daher die Aufgabe zugrunde, ein Verfahren und eine Vorrichtung zur kontinuierlichen Umhüllung von Materialbahnrollen zu schaffen. Diese Lösung soll sich dabei durch einen möglichst geringen konstruktiven und steuerungstechnischen Aufwand auszeichnen.

Die erfindungsgemäße Lösung ist durch die Merkmale der Ansprüche 1 und 10 charakterisiert. Vorteilhafte Ausführungen sind in den Unteransprüchen beschrieben.

Das erfindungsgemäße Verfahren zum kontinuierlichen Verpacken von Materialbahnrollen in einer Verpackungsvorrichtung, umfassend zumindest eine Umhüllungsstation, ist dadurch charakterisiert, dass die einzelnen Materialbahnrollen kontinuierlich mit konstantem Abstand zueinander der Umhüllungsstation zugeführt werden und in dieser durch translatorische Bewegung entlang einer ortsfesten Verpackungsmaterialabgabeeinrichtung unter gleichzeitiger Drehbewegung geführt werden, wobei der Verpackungsstreifen die einzelnen Materialbahnrollen nacheinander ohne Unterbrechung auch über den Abstand zwischen diesen umhüllt und die so umhüllten, hintereinander durch den Umhüllungsbereich geführten Materialbahnrollen über eine Trenneinrichtung unter Ausbildung eines jeweils stirnseitigen Überstandes zwischen zwei benachbarten und voneinander beabstandeten Materialbahnrollen im Abstand zwischen den Materialbahnrollen getrennt werden, indem die fortlaufende Verpackungsumhüllung in diesem Bereich aufgetrennt wird.

Die erfindungsgemäße Lösung ermöglicht es somit, eine Umhüllungsstation kontinuierlich nacheinander mit Materialbahnrollen zu beschicken und diese zu umhüllen, wobei der Umhüllungsvorgang kontinuierlich ohne Unterbrechung fortgesetzt wird. Der durch die Auftrennung im Abstandsbereich entstehende Überstand fungiert als Kantenschutz. Die umhüllte Materialbahnrolle kann dann in einem nachfolgenden Prozessabschnitt weiterverarbeitet werden. Die Ein- und Ausschleusung der einzelnen Materialbahnrollen erfolgt in zeitsparender Weise somit parallel zum Umhüllungsvorgang weiterer Materialbahnrollen.

Die Verpackungsmaterialabgabevorrichtung ist als solche stationär, d.h. insbesondere ortsfest in Vorschubrichtung der zu umhüllenden Materialbahnrollen installiert. Gleichwohl ist ein Verschwenken, insbesondere zur Änderung des Anstellwinkels für den Verpackungsstreifen gegenüber der Oberfläche der Materialbahnrolle möglich. Die stationäre beziehungsweise zumindest während des Umhüllungsvorganges ortsfest verbleibende Verpackungsmaterialabgabevorrichtung ist gemäß einer ersten Ausführung derart hinsichtlich der Ausrichtung der Längskante des Verpackungsmaterialstreifens gegenüber dem Umfang der vorbeigeführten Materialbahnrolle angeordnet, dass dieser mit seiner Längskante in Umfangsrichtung der Materialbahnrolle an die Materialbahn angelegt und durch die der Vorschubbewegung überlagerte Drehbewegung schraubenlinienförmig um die Materialbahnrolle herumgeführt wird. Diese Ausführung bietet den Vorteil einer Verpackungsmaterialabgabevorrichtung mit geringer Baugröße und geringem konstruktiven Aufwand.

Gemäß einer zweiten Ausführung ist die stationäre beziehungsweise während des Umhüllungsvorganges ortsfest verbleibende Verpackungs material abgabe vorrichtung hinsichtlich der Längskante des Verpackungsmaterialstreifens gegenüber dem Umfang der vorbeigeführten Materialbahnrolle in einem spitzen Winkel ausgerichtet, so dass dieser mit seiner Längskante in Umfangsrichtung der Materialbahnrolle an die Materialbahn angelegt und durch die der Vorschubbewegung überlagerte Drehbewegung schraubenlinienförmig mit geringer Steigung um die Materialbahnrolle herumgeführt wird. Durch diese Ausführung wird der Wickelumfang einer Wicklung verlängert.

Der Verpackungsmaterialstreifen wird vorzugsweise zur Erhöhung der Stabilität und Festigkeit der Verpackung derart um die Materialbahnrolle geführt, dass sich die Wicklungen der Verpackungsmaterialumhüllung einander überlappen. Die Größe der Überlappung kann unterschiedlich eingestellt werden.

Eine alternative Führung der Verpackungsmaterialstreifen derart um die Materialbahnrolle, dass die Wicklungen der Verpackungsmaterialumhüllung auf Stoß beziehungsweise nahezu auf Stoss angeordnet sind, bietet den Vorteil einer sehr sparsamen Verpackung, die allerdings sehr hohe Anforderungen an die Genauigkeit der Ausrichtung und Abstimmung der Prozessparameter stellt.

Aufgrund einer überlagerten Vorschubbewegung und einer Drehbewegung kann die Breite der einzelnen Wicklung einer Verpackungsmaterialumhüllung auf einfache Art und Weise durch Veränderung der Prozessparameter als Funktion zumindest einer der nachfolgend genannten Größen, vorzugsweise einer Kombination aus diesen eingestellt werden:
- Transportgeschwindigkeit der Materialbahnrolle durch den Umhüllungsbereich
- Rotationsgeschwindigkeit der Materialbahnrolle
- Durchmesser der Materialbahnrolle
- Anstellwinkel der Verpackungsmaterialabgabevorrichtung gegenüber dem Außenumfang der Materialbahnrolle

In einer vorteilhaften Ausführung der Erfindung sind der Anteil der translatorischen Bewegung und/oder der rotatorischen Bewegung einer Materialbahnrolle frei einstellbar. Dadurch besteht die Möglichkeit, verschiedene Materialbahnrollenarten, insbesondere hinsichtlich der Dimensionierung der Breite und/oder des Durchmessers in einer einzigen Verpackungsvorrichtung ohne konstruktive Veränderungen allein durch die Abstimmung von Vorschub- und Rotationsbewegung zueinander zu verpacken und ferner unterschiedliche Verpackungsanfordungen, insbesondere Wicklungsbreite, Wicklungsanzahl zu erfüllen.

Der Transport, die Tragfunktion und die Verdrehbewegung erfolgt gemäß einer besonders vorteilhaften Ausführung dazu über drehbar gelagerte Tragrollen, wobei wenigstens ein Teil von diesen antreibbar ist und der Anteil der translatorischen Bewegung und/oder der rotatorischen Bewegung einer Materialbahnrolle über die Lage der als Drehachsen fungierenden Längsachsen der Tragrollen vorzugsweise frei einstellbar ist. Die einzelnen Drehachsen können dabei einzeln oder in Gruppen verschwenkbar ausgebildet sein. Auf jeden Fall sind zur Gewährleistung einer sicheren Betriebsweise für unterschiedliche Rollenbreiten derart verschwenkbare und verschwenk- und antreibbare Tragrollen jeweils in einem Abstand zueinander anzuordnen, der kleiner als die minimalste Materialbahnrollenbreite ist. Vorzugsweise werden die einzelnen Tragrollentypen gruppenweise in konstantem Abstand zueinander im Umhüllungsbereich angeordnet.

Gemäß einer besonders vorteilhaften Ausführung kann die Übergabe zwischen einem, dem Umhüllungsbereich vorgeschalteten Beschickungsbereich und/oder einem, dem Umhüllungsbereich nachgeordneten Ausschleusbereich und dem Umhüllungsbereich durch die, die translatorische Bewegung beziehungsweise die Vorschubbewegung in Durchlaufrichtung der Umhüllungsstation erzeugende Kraft bewirkt werden, so dass für diese Bereiche keine zusätzliche Antriebseinheit erforderlich ist.

Zur Realisierung einer kontinuierlichen Betriebsweise mit gleichmäßigem Durchsatz für Materialbahnrollen der gleichen Durchmesser-Dimensionierung wird die, die Vorschubgeschwindigkeit bestimmende Geschwindigkeit der translatorischen Bewegung der Materialbahnrolle im Umhüllungsbereich konstant gehalten. Dadurch kann ferner bei Ausnutzung dieser zur Übergabe zwischen Beschickungsbereich und Umhüllungsbereich ein gleichmäßiger Abstand zwischen zwei hintereinander der Verpackungsvorrichtung zugeführten Materialbahnrollen erzeugt werden.

Gemäß einer weiteren vorteilhaften Weiterentwicklung wird auch die, die Vorschubgeschwindigkeit bestimmende Geschwindigkeit der translatorischen Bewegung der Materialbahnrolle im Beschickungsbereich und/oder dem Ausschleusbereich konstant gehalten, so dass ein konstanter Durchsatz pro Zeiteinheit in der gesamten Verpackungsvorrichtung erzielbar ist.

Im Beschickungs- und/oder Ausschleusbereich wird gemäß einer vorteilhaften Ausführung die einzelne Materialbahnrolle nur translatorisch bewegt, wodurch sich der Aufwand für die Transporteinrichtung erheblich minimieren lässt. Aus dem gleichen Grund erfolgt vorzugsweise innerhalb eines Funktions bereiches auch keine Änderung der Energieform der Bewegung der Materialbahnrolle.

Gemäß einer weiteren vorteilhaften Ausführung erfolgt der Transport der Materialbahnrolle in der Umhüllungsstation mittels einer entsprechenden Transporteinrichtung, über die sowohl die translatorische als auch rotatorische Bewegung an der Materialbahnrolle erzeugt wird. Vorzugsweise ist lediglich eine Einrichtung, die diese Funktionen ineinander vereint, vorgesehen, so dass der Aufwand und Bauraumbedarf gering gehalten werden kann.

Ferner wird vorzugsweise die im Umhüllungsbereich genutzte Transporteinrichtung auch übergreifend für andere Funktionsbereiche eingesetzt.

Die erfindungsgemäße Vorrichtung zum kontinuierlichen Verpacken von Materialbahnrollen umfasst eine Umhüllungsstation mit zumindest einem Umhüllungsbereich mit einer stationäre Verpackungsmaterialabgabevorrichtung zur kontinuierlichen ununterbrochenen Abgabe eines Verpackungsmaterialstreifens, eine Trageinrichtung für die Materialbahnrollen, eine Transporteinrichtung zur Führung der Materialbahnrollen entlang der Verpackungsmaterialabgabevorrichtung, eine Antriebseinrichtung zur Verdrehung der Materialbahnrollen um ihre Längsachse und eine dem Umhüllungsbereich nachgeordnete Trenneinrichtung zur Trennung der Verpackungsmaterialumhüllung im Abstandsbereich zwischen zwei nacheinander umwickelten Materialbahnrollen.

Bezüglich der Ausführungen der einzelnen Einrichtungen besteht eine Mehrzahl von Möglichkeiten. Diese sind durch Funktionstrennung oder Funktionskonzentration charakterisiert. Die Trageinrichtung und die Antriebseinrichtung können gemäß einer ersten Ausführung von zumindest einer am Außenumfang oder im Zentrum der Materialbahnrolle vorgesehenen antreibbaren Tragrolle gebildet werden. Die Transporteinrichtung ist dann als separate Einrichtung vorgesehen und dient im Wesentlichen dem Vorschub.
Denkbar ist ferner, die Transporteinrichtung und die Trageinrichtung in einer Baueinheit zu integrieren und eine separate Antriebseinheit vorzusehen. Gemäß einer besonders vorteilhaften Ausführung mit Funktionskonzentration werden die Funktionen der Trageinrichtung, der Transporteinrichtung und der Antriebseinrichtung von zumindest einer kombinierten Einrichtung übernommen. Diese umfasst beispielsweise gemäß einer vorteilhaften Ausführung zumindest zwei parallel zueinander angeordnete Reihen von hintereinander angeordneten drehbar gelagerten Tragrollen wobei jede der Reihen Tragrollen im Umhüllungsbereich zumindest eine hinsichtlich ihrer Längsachse verschwenkbare und antreibbare Tragrolle sowie eine hinsichtlich ihrer Längsachse schwenkbare Tragrolle umfassen, die frei von einem Antrieb ist.

Die einzelnen antreibbaren Tragrollen einer Reihe sind jeweils in einem Abstand zueinander angeordnet, der kleiner als die minimalste Breite einer theoretisch möglichen, zu umhüllenden Materialbahnrolle ist. Auch die einzelnen schwenkbaren Tragrollen einer Reihe sind jeweils in einem Abstand zueinander angeordnet, der kleiner als die minimalste Breite einer zu umhüllenden Materialbahnrolle ist.

Die einzelnen schwenkbaren und/oder antreibbaren Tragrollen sind einzeln oder vorzugsweise zur Verringerung des Steuerungsaufwandes jeweils in Gruppen ansteuerbar.

Weitere Ausführungen kombinierter Trag- und Transporteinrichtungen können auf dem Prinzip der Kugelbüchsenführung basieren. Dazu sind wenigstens zwei sich in Vorschubrichtung erstreckende endlose umlaufende Kugelketten vorgesehen. Diese führen und trennen die einzelnen einander benachbart angeordneten Kugeln kontrolliert voneinander. Zwischen den einzelnen Kugeln sind dazu Abstandshalter vorgesehen und die Führung erfolgt vorzugsweise an flexiblen seitlich angeordneten Führungselementen. Derartige Kugelketten sind in einer Vielzahl von Ausführungen aus dem Stand der Technik zur Realisierung von Linearführungen bekannt.

Um bei der Ausnutzung von Kugeln als Tragmittel den Nachteil von Punktlasten zu vermeiden und eine linienförmige Berührung zwischen Materialbahnrolle und Tragelement zu realisieren, finden Ketten aus zylindrischen Elementen, die entlang ihrer Längsachsen geführt sind und zu einem umlaufenden endlosen Band zusammengefasst werden, Verwendung. Das Prinzip ist das gleiche, wie bei einer Kugelkette, jedoch finden anstatt Kugeln zylindrische Elemente in Form von Tragrollen Verwendung. Über zwei parallel angeordnete Ketten kann eine Art endlose Tragwalze realisiert werden.

In beiden Fällen kann der kombinierten Trag- und Transporteinrichtung entweder eine separate Antriebseinrichtung für die Erzeugung der rotatorischen Bewegung der Materialbahnrollen zugeordnet sein oder aber es werden zumindest wenigstens ein Teil der Tragkörper in Form der Kugeln oder Tragrollen derart angetrieben, dass diese im Zusammenwirken mit der einzelnen Materialbahnrolle auf diese eine Umfangskraft aufbringen. Dazu werden die entsprechenden Tragkörper um eine Achse parallel zur Vorschubrichtung angetrieben beziehungsweise verdreht.

Gemäß einer besonders vorteilhaften Ausführung erfolgt die Trennung der Verpackungsmaterialumhüllung unter Ausnutzung der Verdrehbewegung der Materialbahnrolle, insbesondere durch Anstellen eines Trennelementes oder eines Trennmediums an die Verpackungsmaterialumhüllung. Dazu ist die Trenneinrichtung parallel und mit gleicher Geschwindigkeit gegenüber der Vorschubrichtung der Materialbahnrolle verfahrbar.

Die erfindungsgemäße Lösung wird nachfolgend anhand von Figuren erläutert. Darin ist im Einzelnen folgendes dargestellt:
- Figur 1: verdeutlicht in schematisiert vereinfachter Darstellung den Grundaufbau einer erfindungsgemäß ausgeführten Verpackungsvorrichtung zum kontinuierlichen Beschicken mit Materialbahnrollen;
- Figur 2a und 2b: verdeutlichen in schematisiert vereinfachter Darstellung den Aufbau einer Transporteinrichtung in einer Ansicht von oben und in Perspektivansicht;
- Figur 3a und 3b: verdeutlichen beispielhaft mögliche Ausgestaltungen von Anordnungen der Verpackungsmaterialabgabevorrichtung;
- Figur 4a: verdeutlicht in schematisiert vereinfachter Darstellung eine Ausführung einer Trag- und Transporteinrichtung in Form einer Kugelkette in einer Ansicht von unten;
- Figur 4b: verdeutlicht eine Ausführung gemäß Figur 4a in der Perspektivansicht;
- Figur 5a und 5b: verdeutlichen eine alternative Ausführung einer kombinierten Trag- und Transporteinrichtung zu Figur 4 mit zylindrischen Elementen in Form von Tragrollen in zwei Ansichten;
- Figur 5c: verdeutlicht eine Ansicht von oben auf die Transporteinrichtung gemäß Figur 5a und die Umhüllungsstation.

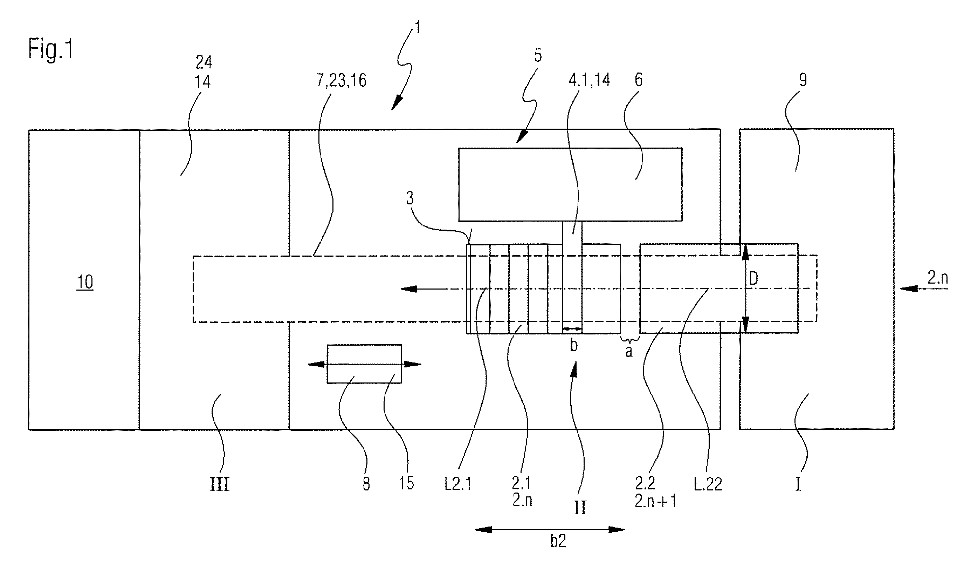

Die Figur 1 verdeutlicht in schematisiert stark vereinfachter Darstellung das Grundprinzip und den Grundaufbau einer erfindungsgemäß ausgeführten Vorrichtung 1 zum kontinuierlichen Verpacken von Materialbahnrollen 2.1 bis 2.n, wobei der Außenumfang 3 der einzelnen Materialbahnrollen 2.1 bis 2.n mit einem Verpackungsmaterial 4 umwickelt wird. Das Umwickeln der Materialbahnrollen 2.1 bis 2.n, hier beispielhaft dargestellt der Materialbahnrollen 2.1 und 2.2, mit dem Verpackungsmaterial 4 erfolgt in einer einen Umhüllungsbereich II bildenden Umhüllungsstation 5, die eine Verpackungsmaterialabgabevorrichtung 6 umfasst. Die Beschickung der Umhüllungsstation 5 erfolgt in einem Beschickungsbereich I, der Bestandteil der Unhüllungsstation 5 sein kann oder aber von einer separaten Beschickungseinrichtung 9, die der Umhüllungsstation 5 vorgeordnet ist, gebildet wird. Die Ausschleusung der verpackten Materialbahnrollen 2.1 bis 2.n erfolgt in einem Ausschleusbereich III entweder direkt aus der Umhüllungsstation 5 oder einer dieser nachgeordneten Ausschleusstation 24, wobei dem Ausschleusbereich III weitere hier nicht dargestellte Verarbeitungsstationen, insbesondere Einrichtungen 10 nachgeordnet sein können.

Die Verpackungsmaterialabgabevorrichtung 6 ist stationär angeordnet, das heißt die Position dieser während des Umwickelvorganges ist ortsfest. Die Verpackungs material abgabe vorrichtung 6 gibt einen Verpackungsmaterialstreifen 4.1 ab. Die Breite b des Verpackungsmaterialstreifens 4.1 ist wesentlich kleiner als die Breite b2 einer Materialbahnrolle 2.1 bis 2.n, die durch die Erstreckung der einzelnen Materialbahnrolle 2.1 bis 2.n parallel zu ihrer Längenachse L_{2.1} bis L_{2.n} charakterisiert ist. Ferner umfasst die Vorrichtung 1 eine Trageinrichtung 23 für die Materialbahnrollen 2.n, eine Transporteinrichtung 7 zum Transport der Materialbahnrollen 2.1 bis 2.n zumindest innerhalb der Umhüllungsstation 5 und eine Antriebseinrichtung 16 zur Verdrehbewegung der Materialbahnrollen 2.n um ihre Längsachsen L_{2.1} bis L_{2.n}. Die Materialbahnrollen 2.1 bis 2.n werden mit ihren Längsachsen L_{2.1} bis L_{2.n} entlang der Verpackungsmaterialabgabevorrichtung 6 geführt. Je nach Wickelart und Anstellwinkel des Verpackungsmaterialstreifens 4.1 ist die Verpackungsmaterialabgabevorrichtung 6, insbesondere die Längsachse der die Verpackungsmaterialrolle tragenden Tragachse parallel oder in einem Winkel gegenüber den Längsachsen L_{2.1} bis L_{2.n} der zu umhüllenden Materialbahnrollen 2.1 bis 2.n angeordnet.

Gemäß der besonders vorteilhaften Ausführung übernimmt hier die Transporteinrichtung 7 gleichzeitig die Funktion der Trageinrichtung 23 und der Antriebseinrichtung 16 für die Materialbahnrollen 2.1 bis 2.n. Über die Transporteinrichtung 7 werden die Materialbahnrollen 2.1 bis 2.n zumindest durch die Umhüllungsstation 5 bewegt, wobei die Bewegung durch die Umhüllungsstation 5 translatorisch, insbesondere seitlich entlang der Verpackungsmaterialabgabevorrichtung 6 erfolgt und die Materialbahnrollen 2.1 bis 2.n gleichzeitig eine Verdrehbewegung um ihre Längsachsen L_{2.1} bis L_{2.n} erfahren. Die Transporteinrichtung 7, Antriebseinrichtung 16 und Trageinrichtung 23, erstrecken sich vorzugsweise zumindest über den Umhüllungsbereich II, vorzugsweise jedoch wenigstens zum Teil auch in den Beschickungsbereich I und den Ausschleusbereich III, so dass hier eine optimale Übergabe der Materialbahnrollen zwischen den Funktionsbereichen erfolgt.

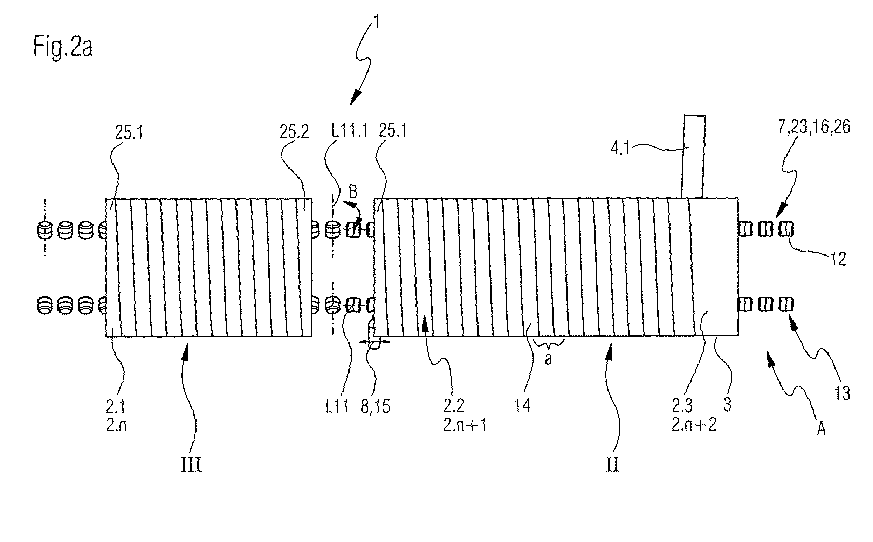

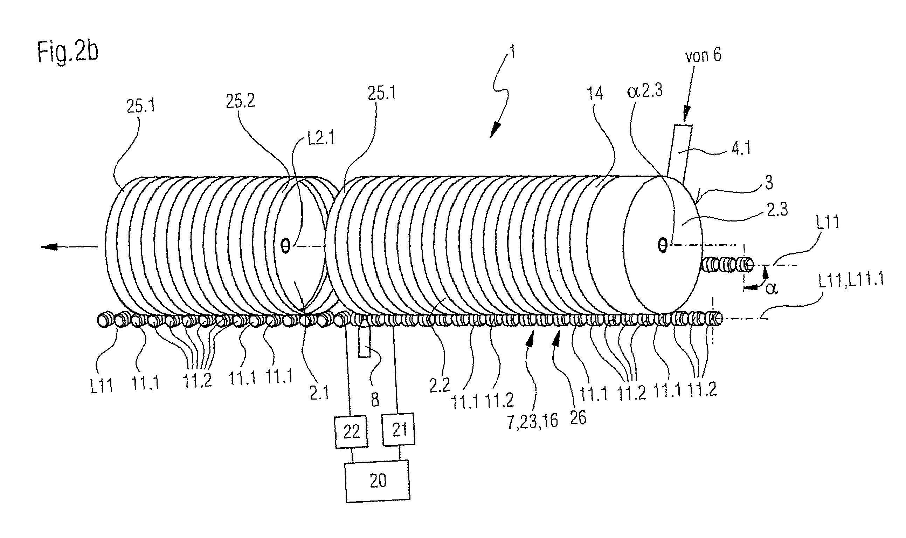

Erfindungsgemäß erfolgt die Beschickung der Vorrichtung 1 mit den Materialbahnrollen 2.1 bis 2.n kontinuierlich, indem die Materialbahnrollen 2.1 bis 2.n nacheinander frei von Unterbrechungen unter Einhaltung eines vordefinierten konstanten Abstandes a zueinander der Umhüllungsstation 5 zugeführt werden und dann innerhalb des Umhüllungsbereiches II, vorzugsweise durch die gesamte Umhüllungsstation 5 mit konstanter Translationsgeschwindigkeit bewegt und über die Verpackungsmaterialabgabevorrichtung 6 mit Verpackungsmaterial 4 umhüllt werden, wobei der Umhüllvorgang auch über die Abstände a zwischen zwei hintereinander in die Umhüllungsstation 5 eingebrachte Materialbahnrollen 2.n und 2.n+1 hinweg unter Ausbildung einer durchgängigen Verpackungsmaterialbahnhülle 14 erfolgt. Der Umhüllungsvorgang wird nicht unterbrochen, d.h. der Verpackungsmaterialstreifen 4.1 wird fortlaufend abgegeben. Die einzelnen Materialbahnrollen 2.n und 2.n+1 werden beim Austritt aus der Umhüllungsstation 5 im Bereich des umwickelten Abstandes a über eine Trenneinrichtung 8 voneinander getrennt. Bei diesem Trennvorgang verbleibt das den Abstand a umhüllende Material als Überstand 25.1 beziehungsweise 25.2, wie detailliert in den Figuren 2a und 2b dargestellt, an den einzelnen Materialbahnrollen 2.1 bis 2.n, wobei nach Ausschleusung aus der Umhüllungsstation 5 in einer Nachbearbeitungsstation an jede Stirnseite der Materialbahnrolle ein Innenstirndeckel angelegt wird und der überstehende Rand 25.1 beziehungsweise 25.2 umgeschlagen wird. An den Stirnseiten der Materialbahnrollen wird dann ein Außenstirndeckel angeordnet, der vorzugsweise als PE-beschichteter Karton-/Pappdeckel ausgebildet ist und unter dem Einfluss thermischer Energie mit dem umgefalteten Überstand beziehungsweise dem von diesen nicht verdeckten Innenstirndeckel verschmolzen wird.

Zur gleichmäßigen Beschickung der Umhüllungsstation 5 ist vorzugsweise die Beschickungsvorrichtung 9 vorgesehen. Über diese, welche auf unterschiedliche Art und Weise ausgeführt werden kann, werden die Materialbahnrollen 2.1 bis 2.n nacheinander, das heißt zeitlich versetzt und in einem bestimmten räumlichen Abstand a zueinander der Umhüllungsstation 5 zugeführt. Das Umschlagen der Ränder 25.1, 25.2 kann nach Ausschleusung aus der Umhüllungsstation 5 in einer der Umhüllungsstation 5 nachgeordneten Einrichtung 10 erfolgen.

Damit ein Umwickeln der einzelnen Materialbahnrolle 2.1 bis 2.n an ihrem Außenumfang 3 möglich ist, wird diese gegenüber der ruhenden Verpackungsmaterialabgabevorrichtung 6 in der Umhüllungsstation 5 in eine rotierende Bewegung versetzt. Durch diese Rotationsbewegung wird die einzelne Materialbahnrolle 2.n mit einem schmalen Verpackungsmaterialstreifen 4.1 umwickelt. Der Umwickelvorgang wird durch eine auf die in einer Verpackungsmaterialabgabevorrichtung 6 drehbar gelagerten Verpackungsmaterialrolle 4 ausgeübte Umfangskraft ausgelöst. Der Verpackungsmaterialstreifen 4.1 wird dabei in einem Winkel zur Längsachse L_{2.1} der einzelnen Materialbahnrolle 2.1 am Umfang 3 der Materialbahnrolle 2.1 aufgetragen. Da die Verpackungsmaterialabgabevorrichtung 6 stationär angeordnet ist, wird die Umhüllung der Materialbahnrolle 2.1 beziehungsweise 2.n über ihre Erstreckung in Längsrichtung, das heißt parallel zur Längsachse L_{2.n} durch deren translatorische Bewegung mit überlagerter rotatorischer Bewegung erzielt. Diese wird über die Antriebseinrichtung 16 in der Umhüllungsstation 5, welche Bestandteil der Vorrichtung 1 ist, erzeugt.

Gemäß einer besonders vorteilhaften Ausführung werden die Funktionen der Transporteinrichtung und der Einrichtung zur Erzeugung einer rotatorischen Bewegung in einer Einrichtung zusammengefasst. Eine derartige Ausführung einer kombinierten Trag-, Antriebs- und Transporteinrichtung 26 ist in schematisiert stark vereinfachter Darstellung in den Figuren 2a und 2b wiedergegeben. Bei allen Ausführungen wird die Anzahl der Verpackungsmaterialwicklungen um den Umfang 3 einer Materialbahnrolle 2.n und deren Abstand zueinander sowie der Überlappungsgrad durch die Transportgeschwindigkeit der Materialbahnrolle 2.n im Umhüllungsbereich II, die Rotationsgeschwindigkeit der Materialbahnrolle 2.n um ihre Längsachse, den Durchmesser D der Materialbahnrolle 2.n und den Anstellwinkel der Verpackungsmaterialabgabevorrichtung 6 bestimmt. Durch Variation dieser Parameter können die Umwicklungsparameter für die Verpackungsumhüllung einer Materialbahnrolle 2.n eingestellt werden.

Die Figur 2a zeigt in schematisiert stark vereinfachter Darstellung die Führung hier beispielhaft dreier Materialbahnrollen 2.1, 2.2 und 2.3 durch die Vorrichtung 1 in einer Ansicht von oben. Die Materialbahnrolle 2.1 hat bereits den Umhüllungsbereich II, der durch die Umhüllungsstation 5 beschrieben wird, passiert und befindet sich in einem an den Umhüllungsbereich II anschließenden Ausschleusungsbereich III aus der Umhüllungsstation 5. Aus dem Ausschleusungsbereich III kann der Weitertransport zu weiteren Verarbeitungseinheiten 10, beispielsweise einer Einrichtung zum Umschlagen der überstehenden Ränder 25.1, 25.2 und dem Aufbringen eines Papierdeckels beidseits der Stirnseiten der einzelnen Materialbahnrollen 2.1 bis 2.n und erfolgen. Bei diesen Einrichtungen handelt es sich um Einrichtungen, die aus dem Stand der Technik in verschiedenen Ausführungen bekannt sind und die hier ebenfalls zum Einsatz gelangen können, weshalb auf diese im einzelnen nicht weiter eingegangen wird.

Die Materialbahnrolle 2.2 ist bereits mittels des Verpackungsmaterials 4 umwickelt. Erkennbar ist ferner die sich noch beim Umwickeln befindliche Materialbahnrolle 2.3. Daraus ist ersichtlich, dass die Umwicklung ununterbrochen, das heißt frei von Unterbrechungen erfolgt und somit eine geschlossene Verpackungsmaterialhülle 14 zwischen der Materialbahnrolle 2.2 und der nachfolgenden sich noch in der Umhüllungsstation 5 befindlichen Materialbahnrolle 2.3 vorliegt. Dabei hat hier bereits der umwickelte Abstand a zwischen den Materialbahnrollen 2.1 und 2.2 die Trenneinrichtung 8 passiert, wobei die Trenneinrichtung 8 in axialer Richtung parallel zur translatorischen Bewegung der Materialbahnrollen 2.1 und 2.2 verfahrbar ist und mit einem Trennelement 15 an der Verpackungsmaterialhülle 14 wirksam geworden ist, wobei hier durch die Relativbewegung zwischen der Verpackungsmaterialhülle 14 und dem Trennelement 15 aufgrund der Rotation der Materialbahnrolle 2.2 eine Trennung im Bereich des Abstandes a zwischen beiden Materialbahnrollen 2.1 und 2.2 erfolgt ist. Die Trennvorrichtung 8 wird dazu bis zur Beendigung des Trennvorganges in axialer Richtung parallel zur Längsachse L_{2.n} der jeweiligen Materialbahnrolle 2.n mit bewegt. Nach Beendigung des Trennvorganges wird diese vorzugsweise in ihrer Ausgangslage zurückgefahren und beim nächsten erforderlichen Trennvorgang zwischen zwei durchgängig umwickelten Materialbahnrollen, hier 2.2 und 2.3, wieder aktiviert und gegenüber der Verpackungsmaterialumhüllung 14 angestellt. Als Trennelement 15 fungieren entweder ein mechanisches Trennelement, wie beispielsweise ein Messer oder aber alternative Trennmittel, wie Laser oder ein Fluid.

Die Figur 2a verdeutlicht eine besonders vorteilhafte kombinierte Trag- , Antriebs-und Transporteinrichtung 26, die den unterschiedlichen Anforderungen in den einzelnen Abschnitten, Beschickungsbereich I, Umhüllungsbereich II und Ausschleusbereich III gerecht wird und ohne eine Vielzahl unterschiedlicher Antriebseinheiten auskommt. Diese erstreckt sich daher zumindest durch die Umhüllungsstation 5, vorzugsweise wenigstens teilweise auch in die Beschickungseinrichtung 9 und die Ausschleusstation 24. Dazu umfasst die kombinierte Trag-, Antriebs- und Transporteinrichtung 26 zwei Reihen 12, 13 parallel angeordneter Tragelemente, insbesondere Tragrollen 11. Die Reihen sind hier mit 12 und 13 bezeichnet. Die Tragrollen 11 einer Reihe 12, 13 sind hintereinander in Transportrichtung angeordnet. Dabei sind zumindest zwei derartige Reihen vorgesehen, die parallel zueinander angeordnet sind. Denkbar sind auch Ausführungen, bei welchen noch weitere Reihen vorgesehen sein können. Die Reihen 12 und 13 sind dabei im Wesentlichen parallel zur Längsachse L₂ der zu umhüllenden Materialbahnrolle 2 ausgerichtet. Die einzelnen Reihen beinhalten um ihre Längsachsen L₁₁ drehbar gelagerte Tragrollen 11. Zur Realisierung der Förder- und Antriebsfunktion beinhalten die einzelnen Reihen 12 und 13 jeweils wenigstens eine, vorzugsweise eine Mehrzahl von antreibbaren Tragrollen 11.1 und weitere mit ihrer Längsachse L_{11.2} gegenüber der Längsachse L₂ der zu führenden Materialbahnrolle 2 verschwenkbare und drehbar gelagerte Tragrollen 11.2, wobei die antreibbaren Tragrollen 11.1 ebenfalls mit ihrer Längsachse L_{11.2} gegenüber der Längsachse L₂ der zu führenden Materialbahnrolle 2 verschwenkbar sind. Dabei ist über die die Verschwenkung beschreibenden Winkel α zwischen der Drehbeziehungsweise Längsachse einer Tragrolle 11 und einer horizontalen Ebene, insbesondere einer durch die Längsachse L₂ und einer Senkrechten in horizontaler Richtung beschreibbaren Ebene und β zwischen der Längsachse L₁₁ der Tragrolle 11 und einer vertikalen Ebene, die durch die Längsachse L₂ und eine Senkrechte zu dieser in vertikaler Richtung beschreibbar ist, der Anteil an translatorischer Bewegung und rotatorischer Bewegung, der auf die Materialbahnrolle 2.n übertragen wird, einstellbar. Die Winkel α und β sind als Funktion des Wickeldurchmessers D der Materialbahnrolle 2 und der Breite b beziehungsweise die gewünschte Anzahl der Wicklungen pro Materialbahnrolle 2.n zu verändern. Durch die Änderung dieser Winkel α und β, der Breite b des Verpackungsmaterialstreifens sowie die Transportgeschwindigkeit durch die Umhüllungsstation 5 ist der Anteil der Rotationsbewegung beim Durchlaufen der Vorrichtung 1 der Materialbahnrolle 2 veränderbar. Über diese Veränderung wird der Verpackungsvorgang, insbesondere der Umhüllungsvorgang an der Materialbahnrolle 2 selbst hinsichtlich der Art der Überlappungsbreite variiert. Ferner kann die Veränderung der Winkel auch genutzt werden, um die Materialbahnrolle 2.n in die Vorrichtung 1 ein-und auszuschleusen, insbesondere vom Beschickungsbereich I in den Umhüllungsbereich II sowie den Ausschleusungsbereich III. Betragen die Winkel α=0° und β=0°, beziehungsweise ist die Längsachse L₁₁ parallel zur Längsachse L₂ wird von der Tragrolle 11 eine Umfangskraft am Außenumfang 3 der Materialbahnrolle 2.n übertragen, die eine reine Rotationsbewegung dieser frei von einer translatorischen Komponente bewirkt. Sind die Winkel α >0° und β> 0°wird je nach Größe eine translatorische Kraftkomponente und eine rotatorische am Außenumfang 3 der Materialbahnrolle 2.n wirksam. Beträgt der Winkel β=90° wird von der Tragrolle 11 eine Kraft am Außenumfang 3 der Materialbahnrolle 2.n übertragen, die eine reine Translationsbewegung dieser frei von einer rotatorischen Komponente bewirkt.

Die einzelnen Tragrollen 11, insbesondere die beiden Reihen 12 und 13, sind hinsichtlich ihrer Lage beziehungsweise der Position ortsfest, jedoch bezüglich ihrer Längsachsen L₁₁ je nach Anordnung in den einzelnen Abschnitten entweder nur drehbar oder auch drehbar antreibbar gelagert. Dabei werden gemäß einer besonders vorteilhaften Ausführung im Umhüllungsbereich II in jeder der Reihen 12, 13 zumindest eine oder vorzugsweise mehrere einander benachbart angeordnet antreibbare einzelne oder in Gruppen zueinander beabstandet angeordnete Tragrollen 11.2 vorgesehen, deren Längsachsen L_{11.2} zur Erzielung der Translationsbewegung und damit des Transportes der Materialbahnrolle 2 durch die Umhüllungsstation 5 senkrecht zur Translationsrichtung beziehungsweise Vorschubrichtung oder der Längsachse L₂ der zu umhüllenden Materialbahnrolle 2.n ausrichtbar sind. Über diese Rollen 11.2, insbesondere deren Angriff am Außenumfang 3, erfolgt somit eine Verschiebung beziehungsweise ein Weitertransport der einzelnen zu umhüllenden Materialbahnrolle 2 in Vorschubrichtung durch die Umhüllungsstation 5.

Um eine möglichst multifunktionale Einheit zu schaffen, insbesondere Materialbahnrollen unterschiedlicher Durchmesser kontinuierlich umhüllen zu können, sind vorzugsweise im Umhüllungsbereich II eine Vielzahl von Tragrollen 11.1 vorgesehen, die antreibbar sind und ferner auch verschwenkbar. Diese sind in den Reihen 12, 13 jeweils beabstandet zueinander angeordnet, wobei der Abstand zwischen beiden ≤ der minimalen Breite einer zu umhüllenden Materialbahnrolle 2.n sein muss. Diese Aussage gilt in Analogie auch für die nur verschwenkbaren Tragrollen 11.2.

Dabei kann die Verschwenkung an einzelnen Tragrollen 11.1, 11.2 in den einzelnen Reihen 12 und 13 einzeln erfolgen. Vorzugsweise wird diese jedoch in Gruppen vorgenommen. Für einen bestimmten Typ einer zu umwickelnden Materialbahnrolle 2.n kann die Einstellung beibehalten werden. Der Aufwand hält sich daher bezüglich der Verschwenkbarkeit und der Einstellung der optimalen Transportbedingungen für die Materialbahnrolle 2.n durch die Umhüllungsstation 5 in Grenzen. Lediglich bei Änderung der Materialbahnrollenparameter, insbesondere des Materialbahnrollentyps, beispielsweise durch Änderung des Durchmessers D und der Länge beziehungsweise Breite b2 sowie der Art der Wicklung und/oder des gewünschten Verpackungsmaterials ist hier eine Einstellung vorzunehmen, wobei die Einstellung vor der Beschickung mit der ersten Materialbahnrolle 2.1 einmal erfolgt und für die restlichen zu verpackenden Materialbahnrollen 2.n+1 beibehalten wird. Da die Tragrollen, egal ob als Antriebsrollen 11.1 oder als reine Tragrollen 11.2 fungierend, hohen Belastungen ausgesetzt sind, weisen diese zur Verschleißminderung eine bombierte Form auf.

Gemäß einer besonders vorteilhaften Ausführung sind die mit ihrer Längsachse L_{11.2} gegenüber der translatorischen Bewegungsrichtung verdrehbaren beziehungsweise neigbaren Tragrollen nur im Umhüllungsbereich II vorgesehen. Im Einschleusungsbereich I sowie dem Ausschleusungsbereich III ist lediglich eine rein translatorische Bewegung gewünscht, so dass hier die Tragrollen 11 mit ihren Längsachsen L₁₁ vorzugsweise senkrecht zur Translationsrichtung ausgerichtet sind. Dabei kann gemäß einer besonders vorteilhaften Ausführung die Drehzahl der antreibbaren Tragrollen 11.1 im Umhüllungsbereich II und im Bereich der Ein-und Ausschleusung I, III in und aus der Verpackungsmaschine unterschiedlich sein. Wobei es hier von Vorteil ist, wenn die Bewegungsenergie der Materialbahnrolle 2.n nicht verändert wird, das heißt, in den Bereichen der Ein- und Ausschleusung eine reine Translationsbewegung stattfindet, während im Bereich der Umhüllung eine kombinierte translatorische und rotatorische Bewegung stattfindet.

Vorzugsweise wird die translatorische Geschwindigkeit über alle Bereiche, das heißt der Einschleusung I, im Umhüllungsbereich II sowie dem Ausschleusungsbereich III konstant gehalten.

Die Figur 2b verdeutlicht hier eine Perspektivansicht gemäß A in Figur 2a. Erkennbar ist hier der Verpackungsstreifen 4.1 des Verpackungsmaterials, die Materialbahnrolle 2.3 und die mit dieser zusammen umhüllte Materialbahnrolle 2.2, die Trenneinrichtung 8 sowie die bereits abgetrennte und sich im Bereich der Ausschleusung III befindliche Materialbahnrolle 2.1. Ersichtlich ist ferner, dass nach erfolgendem Trennvorgang die Umhüllung der Materialbahnrolle 2.1 an der Stirnseite dieser übersteht und somit in einem nachgelagerten Prozess eingeschlagen werden kann.

Die Verpackungsbahn 4 wird mit ihrer Längskante in Umfangsrichtung der Materialbahnrolle 2 an diese angelegt und aufgrund der translatorischen und diese überlagernde rotatorische Bewegung der Materialbahnrolle 2 schraubenlinienförmig um diese herumgeführt. Dazu ist die Abgabevorrichtung 6 in ihrer Lage in Vorschubrichtung der einzelnen Materialbahnrolle 2.n betrachtet stationär, d.h. ortsfest angeordnet, so dass die Materialbahnrolle an dieser vorbeigeführt wird, insbesondere zur Änderung des Anstellwinkels des Verpackungsstreifens kann diese jedoch in einem Winkel um eine Senkrechte zur Vorschubrichtung verschwenkt werden, d.h. gegenüber der die Förderrichtung der Materialbahnrolle 2 bestimmenden Richtung beziehungsweise Achse in ihrer Lage verändert werden, wobei diese Lage dann während des Umhüllungsvorganges beibehalten wird..

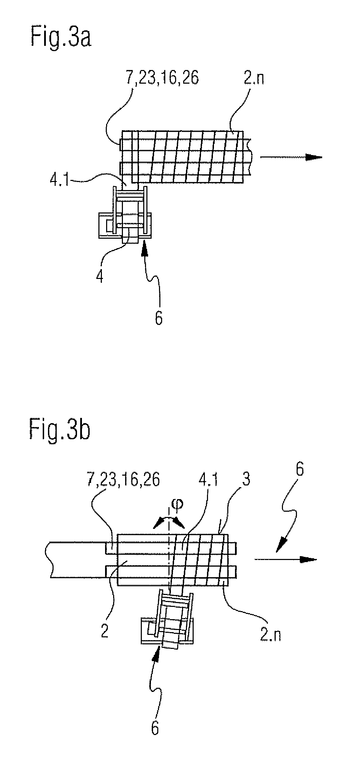

Eine derartige Möglichkeit ist beispielsweise in schematisiert vereinfachter Darstellung in der Figur 3b wiedergegeben. Erkennbar ist hier die Lagerung beziehungsweise Befestigung der Verpackungsmaterialabgabeeinrichtung 6 an einem ortsfesten Gestell beziehungsweise Lagerung dieser mit einer Verschwenkung der Lagerachse in einem Winkel ϕ gegenüber der Oberfläche beziehungsweise dem Außenumfang 3 der zu umhüllenden Materialbahnrolle 2.n unter Erzeugung eines Winkels ϕ zwischen der Längskante des Verpackungsmaterialstreifens 4.1 und der Umfangsrichtung der Materialbahnrolle 2.n. Demgegenüber verdeutlicht Figur 3a eine Ausführung mit Ausrichtung der Längskante des Verpackungsmaterialstreifens 4.1 in Umfangsrichtung der Materialbahnrolle 2.n.

Die Ausführung gemäß der erfindungsgemäßen Lösung umfasst vorzugsweise ferner eine Steuervorrichtung 20, über die entsprechend der gewünschten Verpackungsart sowie Geschwindigkeit, insbesondere Fördergeschwindigkeit und damit Abstand zwischen den einzelnen zu verpackenden Materialbahnrollen 2.n und 2.n+1 die einzelnen Tragrollen 11 hinsichtlich der aufzubringenden Antriebsleistung und/oder ihrer Stellung gegenüber der Förderrichtung eingestellt werden. Dazu sind den einzelnen Tragrollen 11 Stelleinrichtungen zugeordnet, vorzugsweise jeweils zumindest eine Stelleinrichtung 21 für die Beeinflussbarkeit der Antriebsleistung; ferner eine weitere Stelleinrichtung 22 zur Lageänderung der drehbar gelagerten Tragrollen 11.1, 11.2.

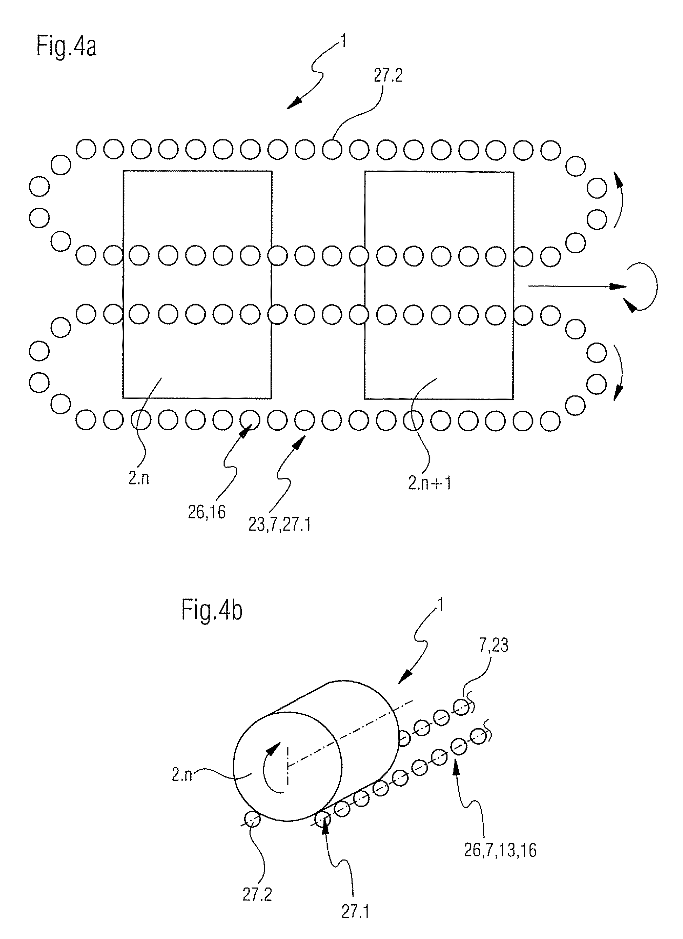

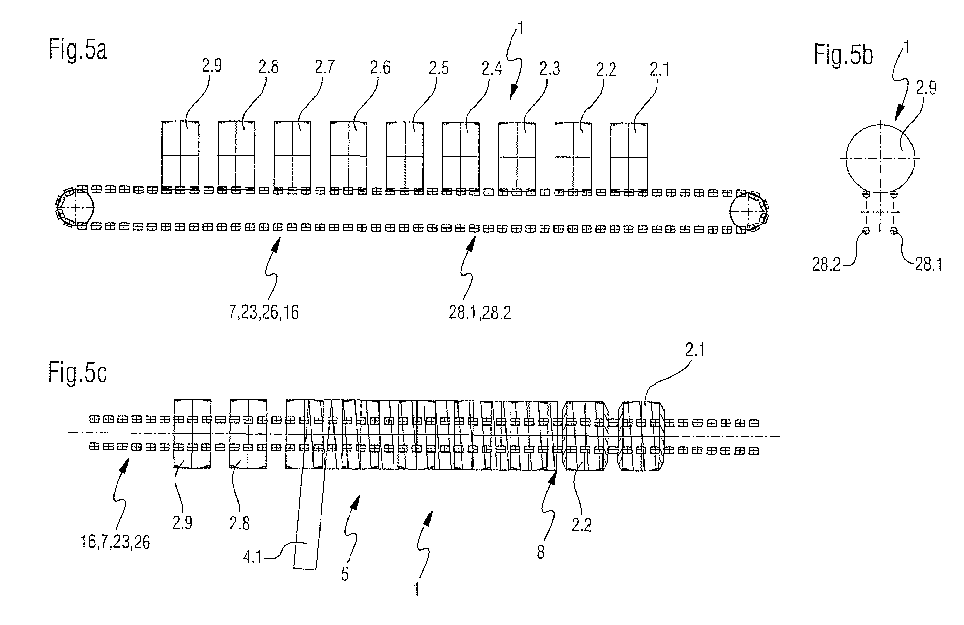

Die Figuren 4 und 5 verdeutlichen eine alternative Ausführung einer Trag- und Transporteinrichtung, vorzugsweise mit integrierter, hier jedoch im einzelnen nicht dargestellter Antriebseinrichtung 16. Figur 4a verdeutlicht in schematisiert stark vereinfachter Darstellung eine Ausführung einer kombinierten Einrichtung, welche zumindest die Funktion der Trageinrichtung 23 und Transporteinrichtung 7, und vorzugsweise auch der Antriebseinrichtung 16 mit übernimmt, in einer Ansicht von unten. Diese umfasst vorzugsweise zumindest zwei parallel zueinander angeordnete Kugelketten 27.1, 27.2. Beim Einsatz der Kugelkette 27.1, 27.2 wird das Prinzip der Kugelbuchsenführung verwendet. Derartige Kugelketten sind in einer Vielzahl von Ausführungen aus dem Stand der Technik vorbekannt, weshalb auf den Aufbau im Detail nicht weiter eingegangen wird. Diese umfassen eine Vielzahl von Kugeln, die einander benachbart durch Abstandshalter unter Ausbildung einer endlosen Kette angeordnet sind. Durch die Kette, in der Regel seitliche Führung, sind die einzelnen Kugeln getrennt voneinander kontrolliert geführt. Die Kugelkette 27.1, 27.2 erstreckt sich parallel in Vorschubrichtung für die zu umhüllende Materialbahnrolle 2.n beziehungsweise 2.n+1 und bildet an der Kugeloberfläche punktförmige Berührungsbereiche, an denen die Materialbahnrolle abgestütz wird. Der Antrieb der Kugelkette 27.1, 27.2 zur translatorischen Bewegung erfolgt im einfachsten Fall über ein antreibbares Führungs- und Umlenkelement in Form einer Antriebsrolle. Die rotatorische Bewegung der Materialbahnrollen 2.1 bis 2.n kann durch den Antrieb zumindest einzelner, vorzugsweise einer Vielzahl von Kugeln der Kugelkette 27.1, 27.2 zur Verdrehung um eine Achse, welche parallel zur Vorschubrichtung ausgeführt ist, realisiert werden.

Figur 4b verdeutlicht eine Ausführung gemäß Figur 4a in der Perspektivansicht;

Figur 5a und 5b verdeutlichen eine alternative Ausführung einer kombinierten Trag-, Antriebs- und Transporteinrichtung 26 zu Figur 4, umfassend zumindest zwei Tragrollenbänder 28.1, 28.2 mit zylindrischen Elementen in Form von Tragrollen in zwei Ansichten, die die Funktion der Trageinrichtung 23, der Transporteinrichtung 7 und der Antriebseinrichtung 16 in einer Einrichtung vereinen. In den Figuren 5a und 5b wurde auf die Darstellung des Verpackungsmaterialstreifens 4.1 und die Umhüllung der Materialbahnrollen 2.1 bis 2.9 verzichtet. Das Grundprinzip ist das gleiche, wie das einer Kugelkette. Die Tragrollen sind im Verbund parallel zu ihren Mittenachsen geführt. Dadurch ist diese Ausführung im Gegensatz zu Figur 4 durch Linienlast charakterisiert, welche Markierungen an der Materialbahnrolle weitestgehend ausschließt. Auch hier sind zumindest zwei parallel angeordnete Tragrollenketten 28.2, 28.2 vorgesehen.

Figur 5c verdeutlicht eine Ansicht von oben auf die Umhüllungsstation 5 gemäß Figur 4 mit Darstellung des Verpackungsmaterialstreifens 4.1.

### Bezugszeichenliste

- 1: Vorrichtung zum kontinuierlichen Verpacken von Materialbahnrollen
- 2.1 - 2.n: Materialbahnrolle
- 3: Umfang
- 4: Verpackungsmaterial
- 4.1: Verpackungsmaterialstreifen
- 5: Umhüllungsstation
- 6: Verpackungsmaterialabgabeeinrichtung
- 7: Transporteinrichtung
- 8: Trenneinrichtung
- 9: Beschickungseinrichtung
- 10: Einrichtung
- 11: Tragrolle
- 11.1: antreibbare Tragrollen
- 11.2: Drehbar gelagerte Tragrollen
- 12: Reihe
- 13: Reihe
- 14: Verpackungsmaterialhülle
- 15: Trennelement
- 16: Antriebseinrichtung
- 18: Überstand
- 20: Steuereinrichtung
- 21: Stelleinrichtung
- 22: Stelleinrichtung
- 23: Trageinrichtung
- 24: Ausschleusstation
- 25.1, 25.2: Überstand
- 26: Kombinierte Trag-, Antriebs- und Transporteinrichtung
- 27.1, 27.2: Kugelkette
- 28.1, 28.2: Tragrollenband

- a: Abstand
- b: Breite
- L₂: Längsachse
- L₁₁: Längsachse
- L₁₁₋₁: Längsachse
- L_{11.2}: Längsachse

- α: Winkel
- β: Winkel
- ϕ: Winkel

## Patentansprüche

1. Verfahren zum kontinuierlichen Verpacken von Materialbahnrollen (2.1, 2.2, 2.3, 2.n) in einer Verpackungsvorrichtung, umfassend zumindest eine, einen Umhüllungsbereich (II) bildende Umhüllungsstation (5),
**dadurch gekennzeichnet,**
**dass** die einzelnen Materialbahnrollen (2.1, 2.2, 2.3, 2.n) in gleichmäßigen Abstand (a) nacheinander der Umhüllungsstation (5) zugeführt werden, translatorisch unter gleichzeitiger Verdrehbewegung um ihre Längsachse entlang einer Verpackungsmaterialabgabevorrichtung (6) bewegt werden und fortlaufend mit einem Verpackungsmaterialstreifen (4.1) unter Ausbildung einer sich über wenigstens eine und einen Teil der dieser nachgeordneten Materialbahnrolle (2.1, 2.2, 2.3, 2.n) erstreckenden Verpackungsmaterialumhüllung (14) umhüllt werden und die Verpackungsmaterialhülle (14) zwischen zwei hintereinander die Umhüllungsstation (5) durchlaufenden Materialbahnrollen (2.1, 2.2, 2.3, 2.n) im Abstandsbereich unter Ausbildung eines Überstandes (25.1, 25.2) getrennt werden.

2. Verfahren nach dem vorhergehenden Anspruch,
**dadurch gekennzeichnet,**
**dass** die Breite (b) der einzelnen Wicklung einer Verpackungsmaterialumhüllung (14) als Funktion zumindest einer der nachfolgend genannten Größen einstellbar ist:
- Transportgeschwindigkeit der Materialbahnrolle (2.1, 2.2, 2.3, 2.n) durch den Umhüllungsbereich (II)
- Rotationsgeschwindigkeit der Materialbahnrolle (2.1, 2.2, 2.3, 2.n)
- Durchmesser (D) der Materialbahnrolle (2.1, 2.2, 2.3, 2.n)
- Anstellwinkel der Verpackungsmaterialabgabevorrichtung (6) gegenüber dem Außenumfang (3) beziehungsweise der Umfangsrichtung der Materialbahnrolle (2.1, 2.2, 2.3, 2.n)

3. Verfahren nach einem der vorhergehenden Ansprüche,
**dadurch gekennzeichnet,**
**dass** der Anteil der translatorischen Bewegung und/oder der rotatorischen Bewegung einer Materialbahnrolle (2.1, 2.2, 2.3, 2.n) frei einstellbar ist.

4. Verfahren nach Anspruch 3,
**dadurch gekennzeichnet,**
**dass** der Transport, die Tragfunktion und die Verdrehbewegung über drehbar gelagerte Tragrollen (11, 11.1, 11.2) erfolgt, wobei wenigstens ein Teil von diesen (11.1) antreibbar ist und der Anteil der translatorischen Bewegung und/oder der rotatorischen Bewegung einer Materialbahnrolle (2.1, 2.2, 2.3, 2.n) über die Lage der als Drehachsen fungierenden Längsachsen (L₁₁, L_{11.1}, L_{11.2}) der Tragrollen (11, 11.1, 11.2) einstellbar ist.

5. Verfahren nach einem der vorhergehenden Ansprüche,
**dadurch gekennzeichnet,**
**dass** die Übergabe zwischen einem, dem Umhüllungsbereich (II) vorgeschalteten Beschickungsbereich (I) und/oder einem, dem Umhüllungsbereich (II) nachgeordneten Ausschleusbereich (III) durch die die translatorische Bewegung, insbesondere Vorschubbewegung durch den Umhüllungsbereich (II) erzeugende Kraft erfolgt.

6. Verfahren nach einem der vorhergehenden Ansprüche,
**dadurch gekennzeichnet,**
**dass** die die Vorschubgeschwindigkeit bestimmende Geschwindigkeit der translatorischen Bewegung der Materialbahnrolle (2.1, 2.2, 2.3, 2.n) im Beschickungsbereich (I) und/oder Umhüllungsbereich (II) und/oder dem Ausschleusbereich (III) konstant gehalten wird.

7. Verfahren nach einem der vorhergehenden Ansprüche,
**dadurch gekennzeichnet,**
**dass** die Bewegungsformen in den einzelnen Funktionsbereichen (I, II, III) über die Erstreckung dieser Funktionsbereiche (I, II, III) in Durchlaufrichtung betrachtet beibehalten werden, insbesondere dass der Antrieb der Materialbahnrolle (2.1, 2.2, 2.3, 2.n) im Beschickungsbereich (I) und/oder Ausschleusbereich (II) nur translatorisch erfolgt.

8. Verfahren nach einem der vorhergehenden Ansprüche,
**dadurch gekennzeichnet,**
**dass** die Trennung der Verpackungsmaterialumhüllung (14) zwischen zwei hintereinander angeordneten Materialbahnrollen (2.1, 2.2, 2.3, 2.n) im Bereich des Abstandes (a) zwischen diesen mittels einer Trenneinrichtung (8) erfolgt, wobei das Trennelement oder Trennmedium (15) parallel zum Vorschub der Materialbahnrollen (2.1, 2.2, 2.3, 2.n) mit gleicher Vorschubgeschwindigkeit bewegt wird.

9. Verfahren nach einem der vorhergehenden Ansprüche,
**dadurch gekennzeichnet,**
**dass** die Materialbahnrolle (2.1, 2.2, 2.3, 2.n) nach dem Ausschleusbereich weiteren Verarbeitungsstationen zugeführt wird.

10. Vorrichtung (1) zum kontinuierlichen Verpacken von Materialbahnrollen (2.1, 2.2, 2.3, 2.n) mit einer Umhüllungsstation (5), umfassend zumindest einen Umhüllungsbereich (II) mit einer stationäre Verpackungsmaterialabgabevorrichtung (6) zur kontinuierlichen ununterbrochenen Abgabe eines Verpackungsmaterialstreifens (4.1), eine Trageinrichtung (23) für die Materialbahnrollen (2.1, 2.2, 2.3, 2.n), eine Transporteinrichtung (7) zur Führung der Materialbahnrollen (2.1, 2.2, 2.3, 2.n) entlang der Verpackungsmaterialabgabevorrichtung (6), eine Antriebseinrichtung (16) zur Verdrehung der Materialbahnrollen (2.1, 2.2, 2.3, 2.n) um ihre Längsachse (L₂, L_{2.1}, L_{2.2}, L_{2.3}) und eine dem Umhüllungsbereich (II) nachgeordnete Trenneinrichtung (8) zur Trennung der Verpackungsmaterialumhüllung (14) im Abstandsbereich (a) zwischen zwei nacheinander umwickelten Materialbahnrollen (2.1, 2.2, 2.3, 2.n).

11. Vorrichtung (1) nach Anspruch 10,
**dadurch gekennzeichnet,**
**dass** die Trageinrichtung (23) und die Antriebseinrichtung (16) von zumindest einer am Außenumfang (3) oder im Zentrum der Materialbahnrolle (2.1, 2.2, 2.3, 2.n) vorgesehenen antreibbaren Tragrolle gebildet werden.

12. Vorrichtung (1) nach Anspruch 10 oder 11,
**dadurch gekennzeichnet,**
**dass** die kombinierten Einrichtung (26) zumindest zwei parallel zueinander angeordnete Reihen (12, 13) von hintereinander angeordneten drehbar gelagerten Tragrollen (11, 11.1, 11.2) umfasst, wobei jede der Reihen von Tragrollen (11, 11.1, 11.2) im Umhüllungsbereich (II) zumindest eine hinsichtlich ihrer Längsachse (L₁₁, L_{11.1}) verschwenkbare und antreibbare Tragrolle (11.1) sowie eine hinsichtlich ihrer Längsachse (L₁₁, L_{11.2}) schwenkbare Tragrolle (11.2) frei von einem Antrieb umfassen.

13. Vorrichtung (1) nach Anspruch 12,
**dadurch gekennzeichnet,**
**dass** die einzelnen antreibbaren und/oder schwenkbaren Tragrollen (11.1) einer Reihe (12, 13) jeweils in einem Abstand zueinander angeordnet sind, der kleiner als die minimalste Breite (b2) einer zu umhüllenden Materialbahnrolle (2.1, 2.2, 2.3, 2.n) ist.

14. Vorrichtung (1) nach einem der Ansprüche 10 bis 13,
**dadurch gekennzeichnet,**
**dass** die einzelnen schwenkbaren und/oder antreibbaren Tragrollen (11.1, 11.2) einzeln und/oder jeweils in Gruppen ansteuerbar sind.

15. Vorrichtung (1) nach einem der Ansprüche 10 bis 14,
**dadurch gekennzeichnet, dass** die Einrichtung oder kombinierte Einrichtung (26) zumindest zwei parallele, endlose, sich in Vorschubrichtung erstreckende umlaufende und antreibbare Kugelketten (27.1, 27.2) oder Tragrollenketten (28.1, 28.2) umfasst.

16. Vorrichtung (1) nach einem der Ansprüche 10 bis 15,
**dadurch gekennzeichnet,**
**dass** die Trenneinrichtung (8) zumindest ein mechanisches Trennelement (15) oder eine ein Trennmedium abgebende Einrichtung umfasst, die parallel zur Vorschubrichtung der Transporteinrichtung (7) verschiebbar ist.

17. Vorrichtung (1) nach einem der Ansprüche 10 bis 16,
**dadurch gekennzeichnet,**
**dass** diese einen, dem Umhüllungsbereich (II) vorgeordneten Beschickungsbereich (I) und einen, dem Umhüllungsbereich (II) nachgeordneten Ausschleusbereich (III) umfasst und die im Umhüllungsbereich (II) vorgesehene Transporteinrichtung (7) oder kombinierte Trag-, Antriebs- und Transporteinrichtung (26) sich wenigstens teilweise über den Beschickungsbereich (I) und/oder den Ausschleusbereich (III) erstreckt.

18. Vorrichtung (1) nach einem der Ansprüche 10 bis 17,
**dadurch gekennzeichnet,**
**dass** diese einen, dem Umhüllungsbereich (II) vorgeordneten Beschickungsbereich (I) und einen, dem Umhüllungsbereich (II) nachgeordneten Ausschleusbereich (III) umfasst und Umhüllungsbereich (II), Beschickungsbereich (I) und Ausschleusbereich (III) in der Umhüllungsstation (5) integriert sind oder von separaten Einrichtungen gebildet werden.
